# FASCICULE DE BREVET EUROPEEN

(11) **EP 0 577 478 B1**
(45) Date de publication et mention de la délivrance du brevet: **12.03.1997**
(21) Numéro de dépôt: 93401635.3
(22) Date de dépôt: 25.06.1993
(51) Int. Cl.: G01S 13/78

(54) **Procédé et dispositif de filtrage des réponses dans un extracteur de radar secondaire**
Verfahren und Vorrichtung zum Filtern der Antworten in einem Sekundärradarextraktor
Procedure and device for filtering the responses in a secondary surveillance radar extractor

(30) Priorité: 30.06.1992 FR 9208025
(43) Date de publication de la demande: 05.01.1994
(73) Titulaire: THOMSON-CSF, 75008 Paris (FR)
(72) Inventeur: Billaud, Philippe, F-92402 Courbevoie Cedex 08 (FR); Creveau, Denis, F-92402 Courbevoie Cedex 08 (FR); de Volder, Claude, F-92402 Courbevoie Cedex 08 (FR); Largilliere, Lionel, F-92402 Courbevoie Cedex 08 (FR)
(74) Mandataire: Benoit, Monique

(56) Documents cités:
- EP-A- 0 184 956
- US-A- 3 705 402
- US-A- 3 913 100
- US-A- 4 896 158
- US-A- 5 126 744

## Description

La présente invention se situe dans le domaine du filtrage des réponses reçues par un extracteur situé en aval d'un récepteur secondaire de radar.

On sait que les radars peuvent être munis d'un dispositif appelé radar secondaire permettant d'obtenir de véhicules porteurs coopératifs, équipés de répondeurs radar, des informations codées sur l'identité du porteur et d'autres informations codées (altitude, signalisation de pannes radios, détresse).

Les répondeurs des véhicules porteurs émettent des réponses chaque fois qu'ils sont interrogés, et parfois, dans un mode de fonctionnement dit mode S, de façon spontanée. Chaque radar équipé d'un radar secondaire doit donc être doté de moyens lui permettant d'éliminer parmi toutes les réponses reçues, celles qui ne sont pas les réponses à ses propres interrogations. Le dispositif remplissant cette fonction est un défruiteur, dont le rôle est d'éliminer les fruits, nom donné aux réponses à d'autres interrogateurs radars mais néanmoins reçues par tous les radars.

Un défruiteur comporte de façon connue un filtre synchrone qui vérifie que les réponses reçues au cours des périodes d'écoute suivant chacune des interrogations, sont synchrones avec les interrogations du radar. L'interrogation et la période d'écoute la suivant constituent ce qui sera appelé par la suite une récurrence. Le radar interrogeant avec une certaine fréquence de récurrence doit recevoir des réponses décalées dans le temps, les décalages ayant, pour un balayage d'antenne la même valeur. Le test du synchronisme des réponses peut être tel que chaque réponse est conservée à son arrivée pendant, par exemple, une période d'interrogation, étendue pour tenir compte des tolérances propres aux répondeurs et aux mouvements relatifs de l'interrogateur et du répondeur, et comparée avec la réponse à l'interrogation suivante. Cette comparaison du synchronisme de deux réponses, la réponse stockée et la réponse suivante, représente la méthode la plus simple, et le défruiteur correspondant est appelé un défruiteur 2 sur 2. Lorsque la densité de fruits est élevée, il peut arriver qu'un fruit se trouve par hasard à la même période qu'une réponse attendue, et constitue donc avec la première réponse une réponse dite 'fantôme" ne correspondant pas à une réponse réelle.

Cette possibilité ayant une probabilité d'occurrence non négligeable, il a été créé des critères d'acceptation plus sévères, comme décrit dans le document US-A-4 896 158, correspondant à trois réponses sur trois, ou quatre réponses sur quatre. Dans le critère trois réponses sur trois on exige pour considérer qu'on a une réponse synchrone que les deux réponses successives suivantes correspondent en temps avec la première réponse reçue, trois dans le cas du critère quatre sur quatre.

Si le radar interrogateur recevait une réponse pour chacune des interrogations émises, l'emploi de tels critères ne ferait que diminuer la probabilité de retenir un fruit et donc de former une réponse fantôme.

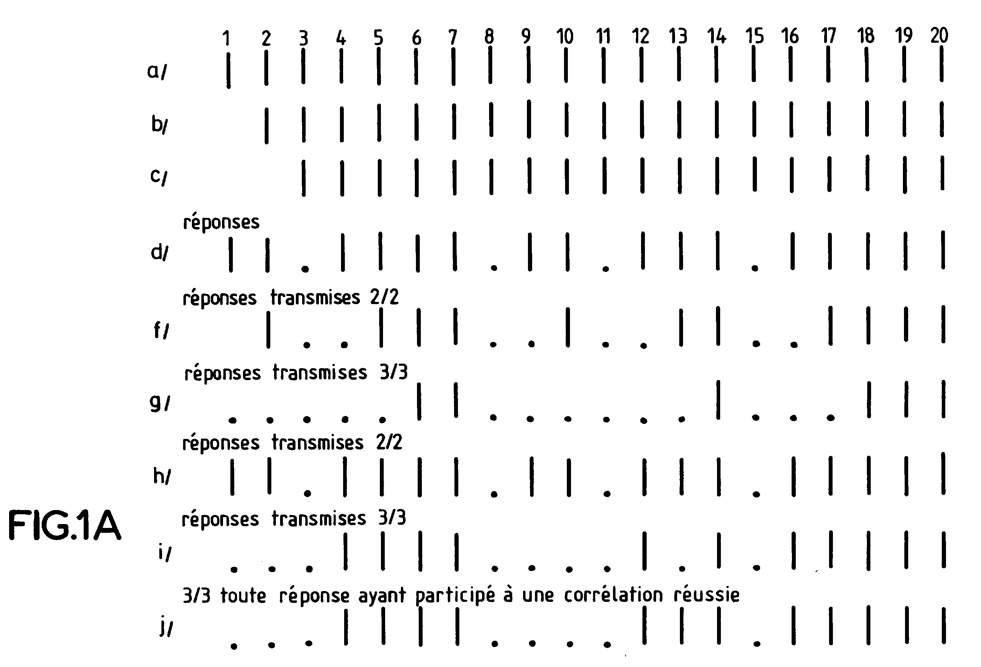

Pour des raisons diverses, désactivation du répondeur pour éviter la surcharge, masque de l'antenne, certaines réponses ne sont pas reçues et de ce fait le défruiteur contribue à dégrader l'information. Cette dégradation de l'information est illustrée en figure 1A.

Cette figure est composée de lignes de traits verticaux.

La première ligne "a" représente vingt traits verticaux numérotés de 1 à 20 et représentant 20 interrogations successives d'un interrogateur dans une direction donnée.

Les deux lignes suivantes b et c représentent le nombre de réponses que l'on obtient en sortie d'un défruiteur en supposant que l'on reçoive 100% de réponse, c'est à dire une réponse à chaque interrogation.

La ligne b est obtenue avec un critère 2 sur 2. En sortie du défruiteur on a donc 19 bonnes réponses puisque le défruiteur ne donne de réponse qu'après que deux réponses au moins aient été obtenues. Ce type de défruiteur perd donc, par principe, la première réponse.

La ligne c est obtenue avec un critère 3 sur 3 et là on n'a que 18 bonnes réponses puisqu'il faut attendre la troisième réponse pour que le défruiteur donne une réponse. Il y a également perte systématique de deux réponses.

Sur la ligne d, on a représenté par des points, des trous dans les réponses, en supposant que 80% seulement des interrogations donnent lieu à une réception de réponse, on a donc représenté quatre trous répartis de façon aléatoire par suppression sur la ligne d des réponses correspondant aux interrogations 3, 8, 11, 15.

Les lignes f et g représentent les réponses en sortie d'un défruiteur fonctionnant avec un critère de 2/2 ou 3/3. Le défruiteur fonctionnant suivant le critère 2/2 ne donne plus que 11 réponses et le défruiteur fonctionnant suivant le critère 3/3 ne donne plus que 6 bonnes réponses. Il convient de remarquer que ce qui vient d'être rapporté sur des exemples se vérifie quel que soit le critère de corrélation adopté, du type, au moins r bonnes réponses sur s récurrences. Les nombres r de réponses corrélantes, c'est-à-dire synchrones avec des interrogations, dans la même fenêtre distance, et s de récurrences considérées pour établir la corrélation sont souvent programmables pour être constamment adaptés à la densité du trafic et donc des réponses.

Il n'en demeure pas moins qu'avec le principe de corrélation adopté on élimine des bonnes réponses, c'est-à-dire des réponses susceptibles de participer avec succès à une corrélation réussie.

Cette élimination provient du fait que chaque réponse qui arrive est conservée pendant un nombre s de récurrences et que l'on va compter sur les s-1 récurrences suivantes si l'on a au moins r-1 réponses synchrones.

On néglige donc de façon systématique les s-1 récurrences précédant la récurrence courante.

L'invention vise à améliorer la probabilité de détection des réponses. Selon l'invention on recherche parmi toutes les séquences de s récurrences consécutives contenant la récurrence courante si on trouve (r-1) autres réponses synchrones. On prend donc en compte non seulement les s-1 récurrences précédentes mais aussi les s-1 récurrences suivantes.

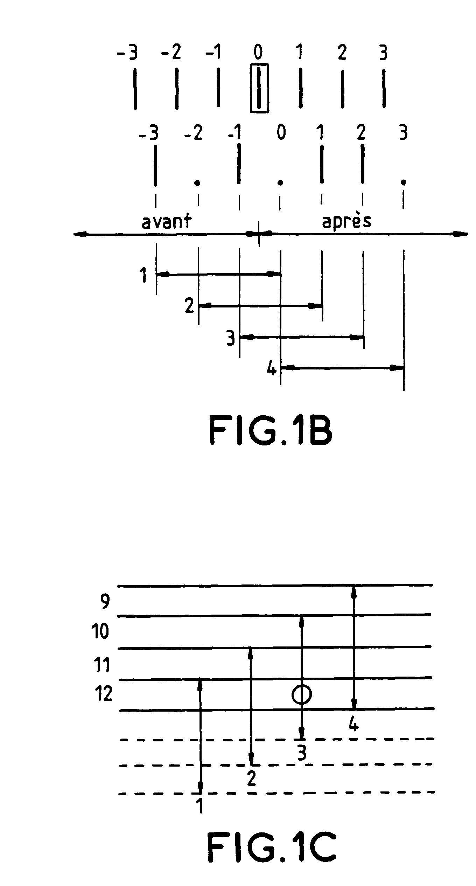

Il est insisté sur le fait qu'il ne s'agit pas uniquement d'établir une corrélation avec les réponses des s-1 récurrences précédentes et avec les réponses des s-1 récurrences suivantes soit au total deux corrélations au lieu de l'unique corrélation des méthodes connues. Il s'agit de vérifier qu'il y a au moins une corrélation avec les réponses des s récurrences précédant ou suivant la récurrence courante et la contenant. Ce point est illustré figure 1B pour un critère r/4. La première ligne de cette figure représente une séquence de 7 interrogations comprenant une interrogation dite courante numérotée 0, trois interrogations précédentes numérotées de -1 à -3 et trois interrogations suivantes numérotées de 1 à 3. Les réponses représentées sur la ligne suivante portent des numéros correspondants. Elles sont représentées par un trait lorsqu'une réponse a été détectée et par un point lorsqu'il n'y a pas eu de réponse. Selon l'invention il sera effectué quatre corrélations avec les quatre récurrences consécutives contenant la récurrence courante. Ces séquences de récurrences sont représentées par des flèches numérotées de 1 à 4 sur la figure 1B.

La première séquence est composée des récurrences -3 à 0, la seconde, des récurrences -2 à 1, la troisième des récurrences -1 à 2 et enfin la dernière des récurrences 0 à 3.

Dans l'exemple représenté sur la figure 1B, si l'on prend un critère 2/4 (r=2) la réponse courante corrèle dans chacune des 4 séquences. Par contre avec un critère 3/4 seule la troisième séquence fournit un résultat de corrélation positif. Une simple corrélation effectuée avec les récurrences précédentes seulement ou suivantes seulement, c'est à dire sur l'exemple les séquences 1 et 4 aurait conduit à rejeter la réponse courante. Le traitement selon l'invention contribue donc bien à augmenter la probabilité de détection. Revenant à l'exemple de la figure 1A, on a représenté les réponses corrélantes et donc transmises dans le cas d'un critère de corrélation de 2/2 sur la ligne h et de 3/3 sur la ligne i, lorsque les réponses sont celles indiquées sur la ligne d. Pour dire qu'il y avait corrélation et établir la ligne h, on a considéré pour chaque réponse de la ligne d non seulement la récurrence suivante mais aussi la récurrence précédente. De même pour la ligne i, on a considéré pour chaque impulsion de réponse de la ligne d non seulement les deux récurrences suivantes mais aussi les deux récurrences précédentes. Pour ces deux lignes (h et i) on a donc représenté les résultats avec seulement deux corrélations. Les lignes h et d sont similaires. Cela signifie qu'avec ce nouveau critère on n'a eu dans ce cas aucune dégradation de l'information. Ce n'est pas toujours le cas ainsi sur la ligne i on a 11 réponses transmises au lieu de 6 sur la ligne g, pour le même critère de corrélation 3/3. Cette amélioration du résultat est possible car on a considéré comme synchrones non seulement les réponses donnant une corrélation réussie avec les deux récurrences suivantes mais aussi celles donnant une corrélation réussie avec les deux récurrences précédentes.

Grâce à l'invention il est encore possible d'améliorer pour un même critère de corrélation le nombre de réponses transmises et donc d'éliminer les fruits sans détérioration de la probabilité de détection des réponses synchrones.

On a vu en effet que le principe de corrélation basé sur l'analyse du futur (ou du passé) de la réponse à corréler est défaillant pour les dernières (ou les premières) réponses d'un transpondeur qui sont, bien que synchrones, considérées comme fruit car n'ayant plus (ou pas encore) assez d'autres réponses corrélantes. Elles sont donc éliminées diminuant d'autant la probabilité de détection et même la précision du radar (le bruit est moyenné sur moins de réponses).

Le défruiteur selon l'invention retient, lui, comme réponses synchrones chacune des réponses ayant participé à une corrélation réussie et ce quelque soit la séquence de récurrences dans laquelle se situe la réponse parmi les s séquences de s récurrences contenant la réponse courante. Il a été représenté sur la ligne j de la figure 1A, pour un défruiteur fonctionnant selon ce principe, les réponses synchrones transmises après défruitage, les réponses reçues étant toujours celles représentées ligne d. Pour chaque réponse de cette ligne il a été effectué trois corrélations comme expliqué en référence à la figure 1B. Les réponses représentées sur la ligne j sont celles qui ont participé à au moins une corrélation réussie selon le critère 3/3. Par rapport à la ligne i qui est la meilleure pour ce critère, on a une réponse supplémentaire qui est la réponse n°13. Cette réponse n'est pas représentée sur la ligne i, car les réponses 11 en amont et 15 en aval sont manquantes. Par contre la réponse 13 participe à une corrélation réussie avec la réponse 12 en amont et 14 en aval. Elle est donc incluse sur la ligne j.

On sait que les radars secondaires peuvent émettre leurs interrogations suivant plusieurs modes d'interrogation. Les réponses du transpondeur sont normalement émises dans le même mode. Dans le procédé selon l'invention on peut choisir d'effectuer des corrélations sur des récurrences sans considération de leur mode, il s'agira de corrélations intermodales, on peut aussi ne retenir que les récurrences où l'interrogation a le même mode, il s'agira de récurrences monomodales.

Dans un mode préféré de réalisation les corrélations seront effectuées à la fois sur des groupes de séquences intermodales et sur des groupes de séquences monomodales, la corrélation étant déclarée positive si elle est réussie sur une seule des séquences.

En résumé l'invention est relative à un procédé de défruitage des réponses de transpondeurs radar recues par un radar secondaire en retour à des interrogations émises par le radar de façon récurrente selon un mode d'interrogation, l'interrogation et la réponse correspondante devant être par convention dans le même mode, une récurrence étant formée par l'interrogation et les réponses reçues au cours d'une période d'écoute suivant l'interrogation, le défruitage consistant à vérifier qu'une réponse reçue à un instant T de la récurrence est corrélée positivement par la présence d'au moins r-1 autres réponses reçues au même instant T de leur récurrence, ces réponses faisant partie d'une séquence d'au moins s récurrences incluant la récurrence en cours, le procédé étant caractérisé en ce que la corrélation est réalisée sur plusieurs séquences choisies formées d'un même nombre de récurrences et incluant toutes la récurrence en cours et que la corrélation est déclarée positive si elle est positive pour l'une des séquences.

La corrélation elle-même est réalisée de façon connue par des registres à décalage comportant des cases, chaque case étant connectée de façon appropriée à des sommateurs pour réaliser la corrélation selon le ou les critères de corrélation retenue. Le problème pour réaliser la corrélation avec les réponses précédentes selon le procédé indiqué plus haut est que lorsque la réponse courante arrive en sortie du registre à décalage, les réponses précédentes en sont sorties et l'on ne dispose que des réponses suivantes qui sont dans les cases précédentes des registres à décalage.

De même on ignore si la réponse courante a déjà ou n'a pas, participé à une corrélation réussie antérieure. C'est pourquoi dans le dispositif selon l'invention il est prévu d'associer dans un dispositif dit A une mémoire réponse classique et une mémoire drapeau. La mémoire classique est une mémoire ordonnée en distance. Elle est constituée de X x a cases mémoires, "a" est la longueur de la mémoire et X sa profondeur "a" représente le nombre de portes distance du récepteur radar secondaire, "X" représente le nombre de récurrences prises en compte pour charger la mémoire. Chaque détection d 'une réponse dans la porte distance aᵢ (0 ≤ aᵢ ≤ a) pour la récurrence j (0 ≤ j ≤ X-1) donne lieu à une inscription dans la mémoire d'adresse i, j. Cette inscription est effectuée en temps réel par le fait que de façon classique l'adressage des cases mémoires est incrémenté de i à i+1 au rythme des battements d'une horloge et de j à j+1 à chaque changement de récurrence. La mémoire drapeau est une mémoire identique à la mémoire des réponses. Elle est aussi ordonnée en distance et est synchrone de la mémoire des réponses. Lorsqu'une réponse de la mémoire des réponses a participé à une corrélation réussie selon le critère choisi elle est marquée dans la mémoire drapeau. Ainsi lors de son traitement, à la récurrence Z elle sera considérée comme synchrone qu'elle corrèle ou non à cette époque, avec les réponses précédentes ou suivantes seules.

Ainsi l'invention est relative à un défruiteur pour extracteur de réponses de transpondeur radar secondaire situé fonctionnement en aval d'un récepteur, le récepteur ayant des périodes successives de réception dites récurrences et étant dotés de moyens permettant la transformation de grandeurs caractérisant les signaux reçus en successions d'échantillons numériques à une cadence d'échantillonnage f, l'extracteur comportant un détecteur des réponses appelées par la suite BPD émises par les transpondeurs, le défruiteur comportant des moyens de stockage des informations de détection, ordonné en distance et par récurrence, un corrélateur recevant en séquence du moyen de stockage les informations de détection et vérifiant pour chacune des détections BPD_{S} d'une récurrence de rang S au moyen d'une corrélation, dite corrélation courante si cette détection est corrélée par la présence d'au moins (r-1) autres détections, à la même distance que la réponse courante, le corrélateur recevant à cet effet en même temps que la réponse en cours de traitement BPD_{S}, les réponses situées à la même distance, d'au moins (r-1) récurrences choisies parmi (s-1) récurrences ayant précédé la récurrence courante, le défruiteur étant caractérisé en ce que le moyen de stockage est une mémoire comportant des cases mémoires ordonnées en s lignes numérotées de 0 à (s-1) et a colonnes, a représentant un nombre de cases distance, une adresse de la mémoire étant constituée par un numéro de colonne i et un numéro de ligne j et en ce que le défruiteur comporte en outre, une mémoire dites drapeau identique à la mémoire de stockage et recevant du corrélateur à l'adresse qu'elles avaient dans la mémoire de stockage les informations de détection de toutes les réponses ayant participé avec la réponse courante à une corrélation réussie, le corrélateur recevant en même temps que les réponses de la mémoire de stockage, l'information de corrélation antérieure positive éventuelle figurant dans la mémoire drapeau à la même adresse que la réponse courante dans sa mémoire,le corrélateur comportant des moyens pour que la corrélation soit déclarée positive soit en cas de présence d'un signal BPD dans la mémoire drapeau à la dite même adresse soit en cas de corrélation courante réussie.

La mémoire drapeau contient de la sorte toutes les réponses ayant participé à une corrélation réussie antérieure. La corrélation est effectuée au moment où ce qui a été appelé la s ième réponse est introduite dans la case distance qui correspond à son moment de réception. La corrélation est donc effectuée une fois avec les s-1 réponses précédentes enregistrées à la même distance. Si la corrélation est positive, les réponses des s-1 récurrences précédentes viendront s'inscrire dans la mémoire drapeau. Si l'on suppose par exemple, qu'à la deuxième récurrence, il y a une réponse cette réponse sera inscrite à sa place dans la mémoire drapeau. Si l'on suppose maintenant qu'à la récurrence suivante, l'ex deuxième réponse qui est devenu la première ne donne pas une corrélation courante positive avec les réponses des s-1 récurrences suivantes, cette réponse serait avec les défruiteurs connus rejetée. Avec un défruiteur selon l'invention cette réponse ne sera pas rejetée car elle se trouvera aussi en sortie de la mémoire drapeau.

L'invention sera maintenant décrite en regard des dessins annexés dans lesquels :
- la figure 1 est destinée à expliquer les résultats obtenus par l'invention ;
- la figure 2, représente l'implantation du dispositif au sein d'un récepteur secondaire ;
- la figure 3, une première et une seconde mémoire matricielle ;
- la figure 4, est destinée à illustrer le fonctionnement et le séquencement du défruiteur
- la figure 5, illustre la nature d'un message de réponse secondaire ;
- la figure 6, représente des séquences d'entrelacement des modes d'interrogation d'un radar secondaire.

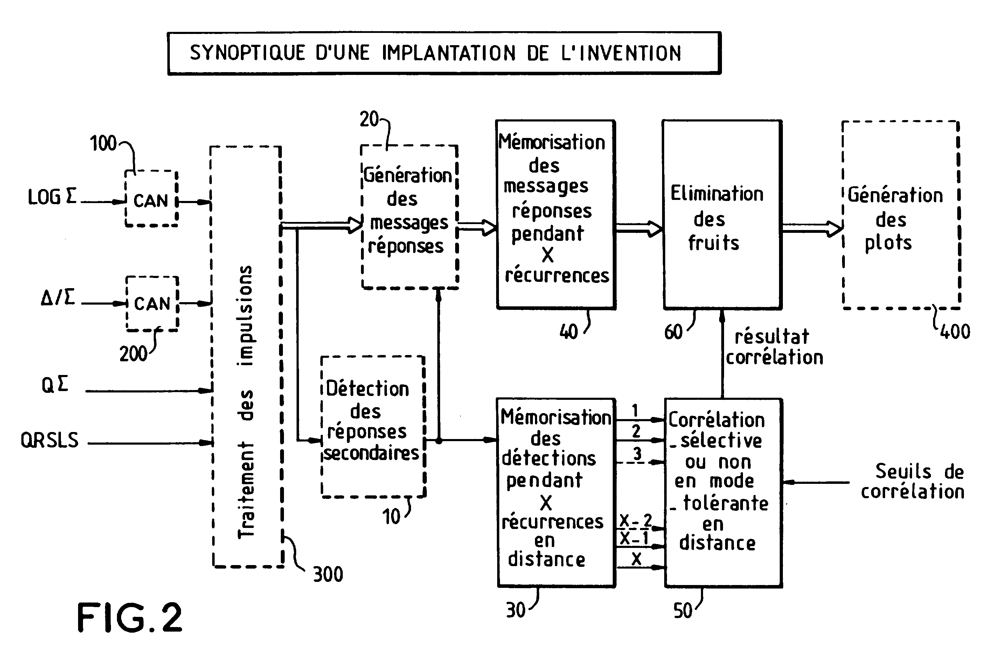

La figure 2 représente l'implantation de l'invention dans un récepteur de radar secondaire. L'invention se situe en aval d'un circuit 300 qui ne fait pas partie de l'invention. Ce circuit reçoit des signaux élaborés de façon connue en elle-même. L'un de ces signaux représente une information dite de façon conventionnelle Log sigma. Ce signal est représentatif de la puissance du signal reçu après qu'il ait été amplifié de façon connue par un amplificateur logarithmique. Ce signal Log sigma est converti en signal numérique par un convertisseur analogique numérique 100 avant d'être introduit dans le dispositif 300. Un autre signal dit de façon conventionnelle Delta sigma et représentatif de l'écart angulaire entre l'axe radioélectrique de l'antenne radar au sol et la position de l'avion dans le lobe de l'antenne, est converti en grandeur numérique par un convertisseur analogique numérique 200 avant son introduction dans le circuit 300.

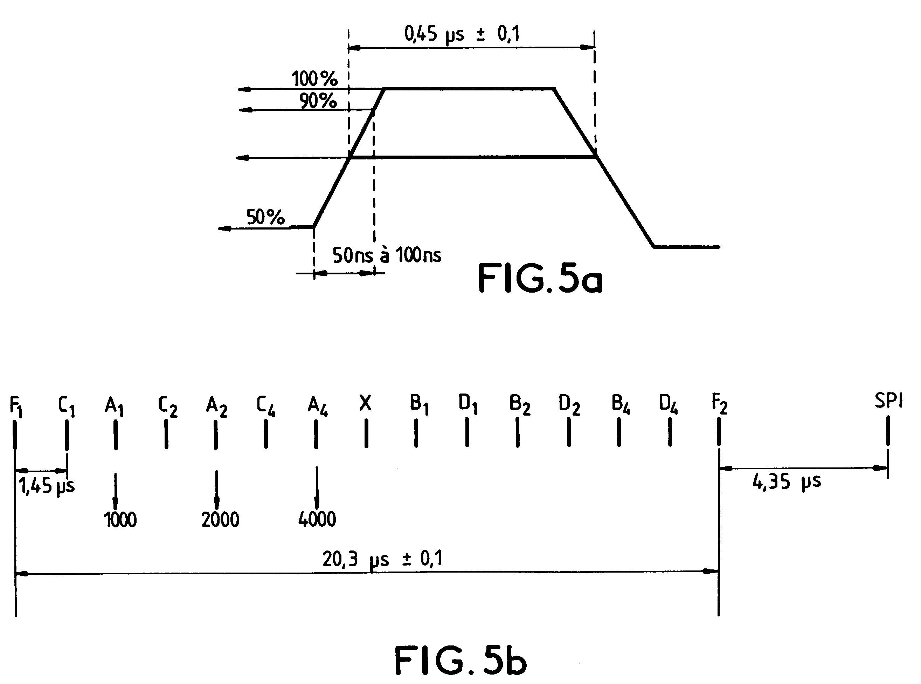

Le circuit 300 reçoit également un signal dit de façon conventionnelle Q sigma qui est la recopie du signal Log sigma diminué de six décibels de façon à obtenir le point milieu de la valeur de la puissance de l'impulsion. Le dispositif 300 reçoit également un signal QRSLS dit de réception sur lobes secondaires. Le dispositif 300 ne faisant pas partie de la présente invention seules les fonctions nécessaires à la compréhension de l'invention seront ci-après décrites. En ce qui concerne le fonctionnement de l'invention le dispositif 300 élabore la position des fronts montants des impulsions. Cette élaboration est faite en prenant en compte la détection des fronts montants réels d'une part et d'autre part en générant des fronts montants artificiels ou pseudo fronts lorsqu'une impulsion réelle a une durée supérieure à la durée normale d'une impulsion. Cette génération peut être faite soit à partir du front arrière de l'impulsion réelle ou si un changement de niveau de puissance est détecté, à partir des moments de ce changement de puissance. Ces pseudo fronts montants sont élaborés à partir de la connaissance que l'on a de la durée normale d'une impulsion émise par un transpondeur de radar secondaire. La normalisation internationale de ce type de réponse est donnée ci-après pour faciliter la compréhension de l'invention en référence à la figure 5.

Une réponse est formée d'un train d'impulsions. Chaque impulsion représentée figure 5a comporte un front montant tel que en 50 ou 100 nanosecondes un niveau de puissance représentant 90% du niveau maximum est atteint. Elle comporte un palier de puissance et un bord de décroissance. L'écart de temps entre les points du front montant et le bord descendant ayant un niveau de puissance égal à 50% de la puissance maximum de l'impulsion est de 0,45 µs + 0,1 µs. Le train d'impulsions représenté figure 5b est encadré par une première impulsion dite F₁ et une dernière impulsion dite F₂. Ces impulsions d'encadrement sont toujours présentes. A des intervalles de temps multiples de 1,45 µs derrière F₁ sont ou ne sont pas présentes douze impulsions. La présence ou l'absence de ces impulsions permet la transmission d'une identité ou d'une altitude. Les noms conventionnels des différentes impulsions figurent sur la figure 5b. Dans certains cas le train d'impulsions comporte une impulsion supplémentaire dite SPI située 4,35 µs derrière F₂.

La présence ou l'absence d'une réponse de radar secondaire est détectée par la présence ou l'absence de la paire d'impulsions d'encadrement F₁ et F₂.

La détection des réponses donc des paires d'impulsions F₁, F₂ effectuée par un module 10 ne fait pas partie de la présente invention.

La présente invention se situe donc en aval du circuit 10 de détection des paires d'impulsions et d'un dispositif 20 qui à partir des informations du dispositif 300 élabore les messages contenus dans chacune des réponses reçues.

Les dispositifs 100, 200, 300, 10, 20, et un dispositif 400 de génération des plots après défruitage, qui sont utiles à la compréhension de l'invention mais n'en font pas partie sont représentées sur la figure 2 en pointillé.

Avant de transmettre ces réponses aux dispositifs de traitement et ou de visualisation, il convient de s'assurer que les réponses détectées ne sont pas des réponses fantômes et donc qu'elles corrèlent entre elles selon des critères de synchronisme décrits plus haut ceci avec une probabilité qui est une fonction du critère de synchronisme retenu.

Dans le mode préféré de réalisation de la présente invention ici décrit, il a été retenu deux critères de corrélation qui sont appliqués tous les deux simultanément, une réponse étant déclarée bonne et transmise si elle vérifie au moins l'un de ces deux critères. Chacun de ces deux critères est cependant applicable isolément

Le premier critère est que au moins N réponses parmi M récurrences corrèlent entre elles.

Le second critère est que au moins P réponses parmi Q récurrences ayant toutes le même mode d'interrogation corrèlent.

Les différents modes d'interrogation et de réponse correspondante sont définis par une norme OACI. Ils sont appelés 1, 2, 3/A, B, C, D. Les modes 1, 2, 3 sont les modes d'interrogations des avions militaires, les modes A, B, C, D sont les modes d'interrogation des avions civils. Les modes 3 ou A sont identiques en sorte qu'ils s'adressent à la fois aux avions civils et militaires.

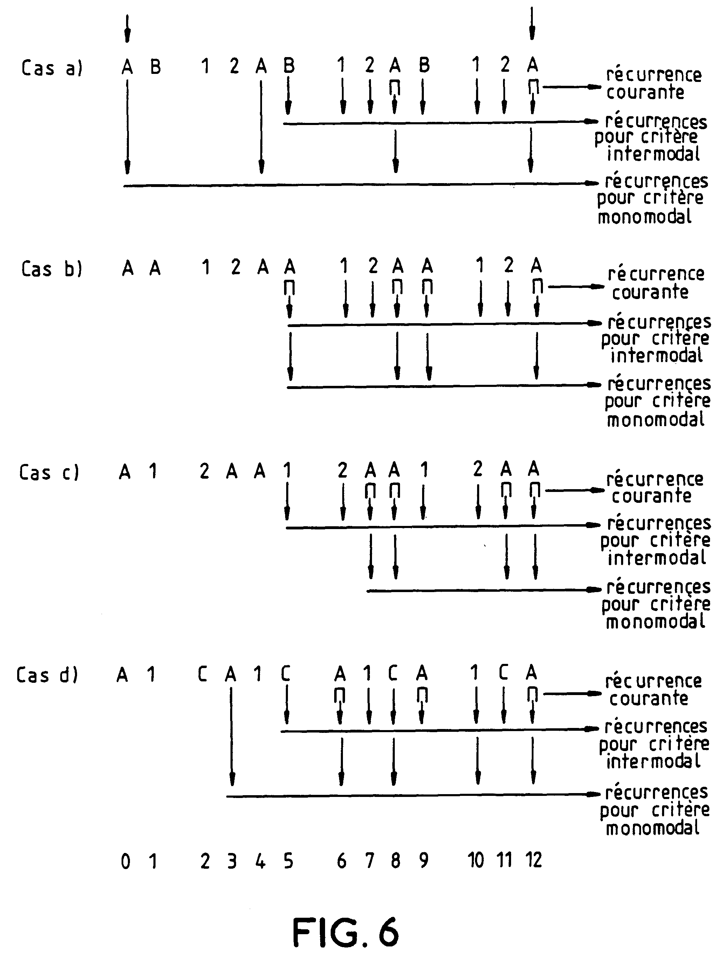

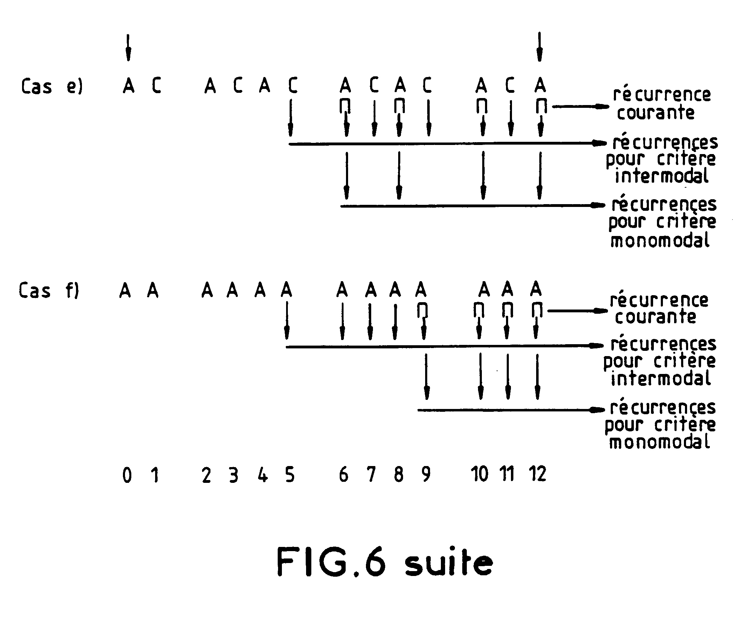

Dans le mode de réalisation préféré de la présente invention on a choisi M = 8 et Q = 4, les nombres N et P sont programmables. La façon dont les modes d'interrogation peuvent être entrelacés en séquences répétitives est donnée figure 6. Cette figure comporte les lignes a à f.

Sur ces figures on voit que pour pouvoir obtenir huit réponses à huit interrogations quel qu'en soit le mode il faut évidemment avoir émis ces huit interrogations. Par contre pour pouvoir avoir quatre réponses en réponse à un seul mode d'interrogation donné il faut un nombre variable d'interrogations qui est de treize dans le cas de la séquence représentée ligne a et de quatre dans le cas représenté ligne f. Ceci est assez général, pour avoir au moins quatre interrogations dans un mode donné, il faut au minimum quatre interrogations et au maximum treize interrogations dans le cas d'un entrelacement de quatre modes. Cette constatation explique pourquoi l'enregistrement des détections est effectué dans le mode de réalisation ici décrit sur treize récurrences comme cela sera décrit plus loin.

Le nombre optimal de récurrences pris en compte pour établir la corrélation est le nombre maximal d'interrogations que peut recevoir un avion au cours d'un passage d'antenne. Ce nombre est proportionnel à la fréquence de récurrence de l'interrogateur et à l'angle d'ouverture de l'antenne et inversement proportionnel à la vitesse de rotation de l'antenne.

Jusqu'ici n'ont été donnés que des éléments ou informations nécessaires à la compréhension du dispositif selon l'invention. Ce dernier sera maintenant décrit.

Le dispositif selon l'invention est un défruiteur composé des dispositifs 30, 50 et 40, 60 (figure 2).

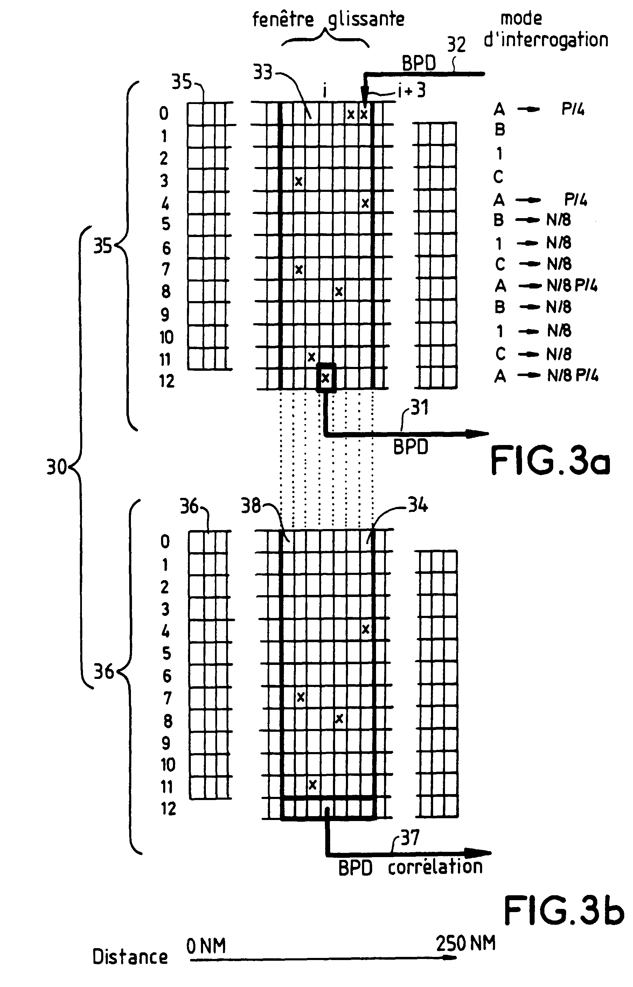

Le dispositif 30 représenté figure 3 est pour moitié une mémoire matricielle 35 dont chaque colonne représente une case distance. Chaque colonne distance représente une distance aller/retour de 50 nanosecondes lumière. Pour une portée de 265 miles nautiques il y a 65536 colonnes.

La seconde moitié 36 du dispositif 30 est une mémoire drapeau identique à la première.

Chacune de ces mémoires a treize lignes. La première de ces mémoires 35 permet donc de mémoriser toutes les détections enregistrées en provenance du dispositif 10. Une information sur un bit dans cette mémoire permet de savoir, connaissant l'adresse de la mémoire, donnée par son n° de colonne i et son numéro de ligne j, qu'une détection appelée BPD a été effectuée à la j ième récurrence en provenance d'un porteur situé à i cases distance de l'interrogateur. La seconde de ces mémoires, la mémoire drapeau, est utilisée pour indiquer qu'une détection de la première mémoire a été utilisée avec succès, dans un corrélateur qui sera décrit plus loin, pour réaliser une corrélation courante antérieure avec d'autres détections .

Le mode d'utilisation de ces mémoires sera maintenant décrit en référence à la figure 3.

Les figures 3a et 3b représentent respectivement une partie des colonnes de la première (35) et de la seconde (36) mémoire, chacune des colonnes comporte treize cases de lignes numérotées de 0 à 12.

En face de chacune des lignes de la mémoire de la figure 3a et sur la droite, il a été inscrit en exemple le mode d'interrogation de la récurrence enregistrée sur la ligne. L'entrelacement des modes d'interrogation de l'exemple représenté figure 3 est tel qu'il faut treize récurrences pour pouvoir obtenir quatre réponses à un même mode d'interrogation.

Deux traits noirs épais encadrent sept colonnes mémoires.

Ces sept colonnes comportent une colonne centrale d'adresse i, trois colonnes précédentes d'adresse i-1 à i-3 et trois colonnes suivantes d'adresse i+1 à i+3.

Ces sept colonnes constituent une fenêtre glissante 33, qui avance d'une colonne à chaque incrémentation de i. La colonne i représente la colonne courante en cours d'examen. Les cases distances d'adresse i-3 à i+3 sont, compte tenu des tolérances, considérées comme équivalentes pour le traitement en cours à la case distance i. Les tolérances en distance sont essentiellement dues aux tolérances sur les temps de réponse des transpondeurs et à l'incertitude introduite par l'échantillonnage numérique au niveau des convertisseurs.

Sur la figure 3a deux flèches marquent le fonctionnement en séquence de la mémoire. La flèche supérieure 32 indique que le chargement de la mémoire avec les signaux BPD en provenance du détecteur 10 s'effectue à la ligne 0 en colonne i+3, pendant que l'examen des réponses pour corrélation se fait en colonne i, ligne 12. Un traitement de corrélation est déclenché par la présence d'un 1 dans la colonne courante i à la ligne 12. La corrélation est déclarée positive et la réponse transmise si l'une des deux conditions suivantes est remplie : 1) il y a une information de corrélation antérieure positive en sortie des cases i-3 à i+3 de la ligne 12 de la mémoire drapeau 36 ou 2) la corrélation courante effectuée dans le dispositif 50 est positive.

Le résultat de la corrélation ainsi réalisée alimente un dispositif classique d'élimination des fruits 60. (Figure 2). Ce dispositif reçoit de façon en elle-même connue les messages réponses en provenance d'une mémoire de temporisation 40. Cette mémoire a pour fonction de conserver les messages reçus pendant le temps nécessaire à l'exécution des corrélations soit dans le cas de la réalisation, treize récurrences.

Le dispositif 60 réalise notamment :
- la synchronisation entre les détections qui sont retardées du temps nécessaire à l'exécution des corrélations, et les données associées à ces détections stockées dans la mémoire 40 ;
- la vérification du traitement de toutes les réponses d'une récurrence précédente avant le passage à la récurrence suivante ;
- la correspondance entre les BPD traités et les données du message associé à la paire F₁ F₂ correspondant à ce BPD ;
- enfin, il effectue le filtrage en ne transmettant pas au dispositif 400 de génération des plots, le message d'une réponse considérée comme asynchrone car n'ayant jamais corrélé.

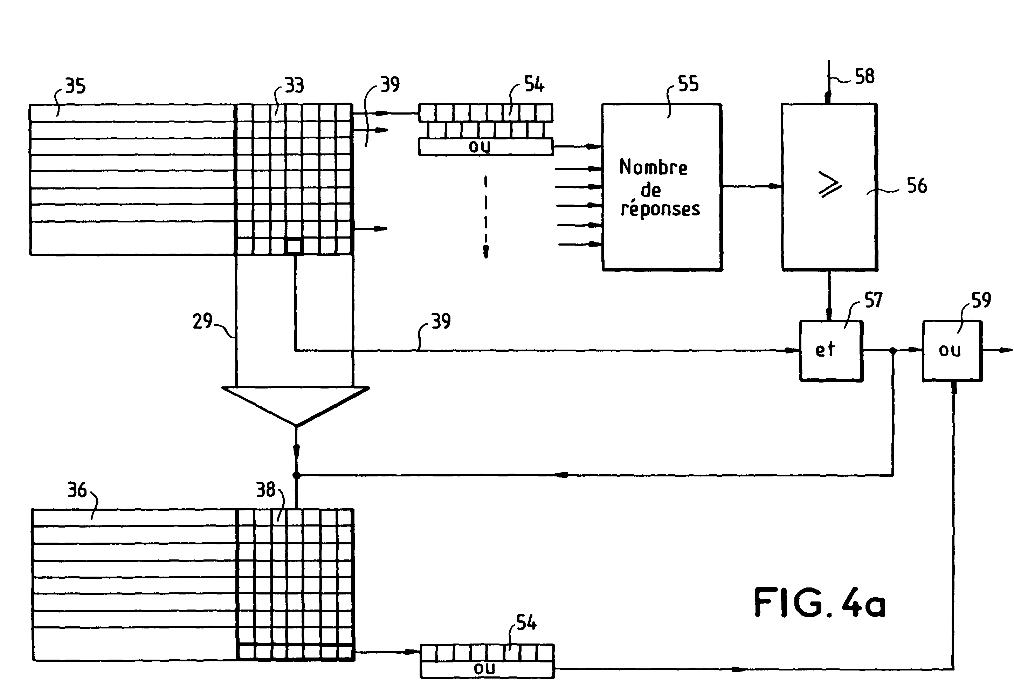

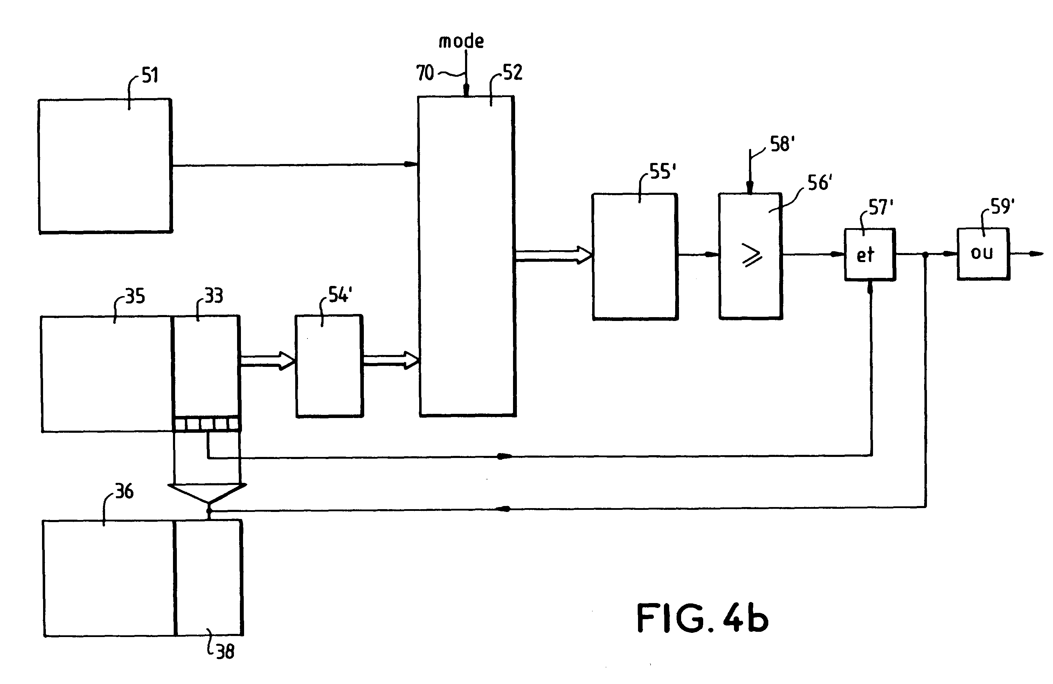

La description et le fonctionnement du dispositif 50 seront maintenant explicitées en référence aux figures 4a et 4b en particulier, en ce qui concerne le mode de chargement de la mémoire drapeau.

La figure 4a représente un dispositif de corrélation fonctionnant avec un seul choix prédéterminé des lignes suivant la ligne courante, pour l'exécution de la corrélation, par exemple, corrélation intermodale sur des récurrences consécutives suivant la récurrence courante. Les mémoires de détection et drapeau sont représentées par les rectangles 35 et 36, les fenêtres glissantes d'adresse centrale i de chacune des mémoires par les rectangles 33, 38. Seules les données figurant dans ces fenêtres sont utilisées pour la corrélation.

Des données de la fenêtre 33 sont extraites par un bus parallèle 39 ayant une voie par ligne de mémoire. Ces données sont envoyées vers un dispositif 55 destiné à compter le nombre de réponses. Un ensemble intermédiaire de portes "ou" 54 dont une seule est représentée permet de ne compter que pour une seule réponse, les réponses qui se trouvent sur une même ligne. La sortie du dispositif 55 alimente un comparateur 56 dont le terme de comparaison est introduit par une commande 58.

La sortie du comparateur 56 alimente un ensemble de porte "et" 57 qui reçoit aussi par une voie du bus 39, le signal BPD en cours d'examen. Si le critère intermode est sélectionné et que la sortie du dispositif 56 est positive, le dispositif 57 autorise alors le chargement des données des lignes de la fenêtre 33 ayant participé à la corrélation à l'adresse correspondante de la fenêtre 38 de la mémoire 36.

Une porte "ou" 59 qui reçoit la sortie des portes "et", 57 et l'information de présence d'une information de corrélation antérieure positive sur les colonnes i-3 à i+3 de la dernière ligne de la mémoire drapeau, donne en sortie le résultat de la corrélation.

La figure 4b représente un dispositif de corrélation avec possibilité du choix des lignes participant à la corrélation, par exemple pour réaliser des corrélations intermodales ou monomodales sur des récurrences consécutives suivant la récurrence en cours. Sur cette figure, les éléments ayant la même fonction que ceux de la figure 4a portent le même numéro avec un < < ' > > pour les distinguer.

Pour ce mode de corrélation il a été ajouté des dispositifs 51 et 52. Le dispositif 51 génère les données relatives à l'entrelacement des modes d'interrogation et le dispositif 52 permet à partir de ces données et d'une commande de mode 70 de sélectionner les lignes de la fenêtre 33 qui sont dans le même mode et qui suivent la récurrence en cours, ou les récurrences suivant la récurrence en cours indépendamment de leur mode. Le dispositif 55' ne reçoit plus grâce au dispositif 52 que les données relatives à ces lignes.

Le fonctionnement est dans le cas du mode préféré le suivant : les données introduites dans les dispositifs 55 ou 55' sont celles des (N-1) récurrences consécutives suivant la récurrence en cours ou celle de X-1 récurrences suivant la récurrence en cours soit dans le cas de la réalisation 7 ou 12 respectivement. Les seuils de comparaison introduits par les commandes 58, 58' sont les nombres P-1 et Q-1 respectivement. Un résultat positif est obtenu en sortie du dispositif 56, 56' si le nombre de réponses comptées est supérieur au seuil introduit par les commandes 58, 58' respectivement.

Le séquencement de toutes les opérations à l'intérieur des différents moyens de la réalisation incorporant le dispositif selon l'invention est effectué au rythme d'une horloge qui commande à la fois l'échantillonnage numérique et les différents séquencement de traitement. De la sorte le traitement est avancé d'une opération à chaque nouvelle prise d'échantillon.

Revenant à l'exemple de la figure 1B, il va être expliqué pourquoi le dispositif selon l'invention réalise bien pour chaque réponse telle la réponse 0 les corrélations au moyen des séquences 1 à 4 figurant sur cette figure.

La corrélation sur la séquence 1 est réalisée en cas de présence d'un BPD à la récurrence -3, de même pour les corrélations sur les séquences 2, 3, 4 qui sont réalisées en cas de présence de BPD aux récurrences -2, -1, et O respectivement. En cas d'absence de BPD à l'une de ces positions la corrélation sur la séquence correspondante n'est pas effectuée. Ainsi sur l'exemple de la figure 1B, les corrélations sur les séquences 2 et 4 ne seraient pas réalisées avec le dispositif selon l'invention. Il convient toutefois de noter que en l'absence de BPD en position -2, la séquence 2 contient au maximum autant de réponses que la séquence 1. La séquence 2 est donc redondante et il n'est pas gênant de la supprimer.

Sur la figure 1c les séquences 1 à 4 ont été représentées en correspondance avec les lignes de mémoire qu'elles utilisent. Quatre lignes mémoire 9 à 12 représentent les dernières lignes de la mémoire 35. La séquence 4 est effectuée avec la récurrence en cours située ligne 12, appelée 0 sur la figure 1b, et les trois récurrences qui la suivent soit les lignes 9 à 11. Les séquences précédentes ont été effectuées à leur tour mais les informations de lignes correspondantes représentées en pointillé ne sont plus dans la mémoire de stockage. Mais, si l'exécution de la séquence 3 par exemple a donné une corrélation réussie à laquelle a participé une réponse se trouvant sur la ligne 12 tel que représentée figure 1c, cette réponse qui se trouvait sur la ligne 11 au moment où la corrélation sur la séquence 3 a été effectuée, a été inscrite sous forme d'information de corrélation réussie dans la mémoire drapeau à sa place ligne 11. Au moment de l'exécution de la séquence 4, cette information de corrélation réussie qui est alors à la ligne 12 de la mémoire drapeau sera considérée comme corrélant même si la séquence 4 ne conduit pas à une corrélation positive.

Ainsi on peut dire que la mémoire drapeau est la mémoire des S-1 corrélations effectuées sur les séquences contenant la réponse courante et effectuée auparavant. La corrélation courante est la s ième et dernière corrélation effectuée avec cette réponse. C'est pourquoi figure 4 c'est le signal en sortie de la porte "ou" 59, qui représente le résultat de corrélation. Cette porte reçoit d'une part le résultat de la corrélation courante et d'autre part l'indication de présence de la réponse dans la mémoire drapeau au niveau de la s ième ligne. Cette présence reflète le résultat de corrélation, pour cette réponse, des s-1 corrélations précédentes auxquelles elle a participé.

## Revendications

1. Procédé de défruitage des réponses de transpondeurs radar recues par un radar secondaire en retour à des interrogations émises par le radar de façon récurrente selon un mode d'interrogation, l'interrogation et la réponse correspondante devant être par convention dans le même mode, une récurrence étant formée par l'interrogation et les réponses reçues au cours d'une période d'écoute suivant l'interrogation, le défruitage consistant à vérifier qu'une réponse reçue à un instant T de la récurrence est corrélée positivement par la présence d'au moins r-1 autres réponses reçues au même instant T de leur récurrence, ces réponses faisant partie d'une séquence d'au moins s récurrences incluant la récurrence en cours, le procédé étant caractérisé en ce que la corrélation est réalisée sur plusieurs séquences choisies formées d'un même nombre de récurrences et incluant toutes la récurrence en cours et que la corrélation est déclarée positive si elle est positive pour l'une des séquences.

2. Procédé selon la revendication 1, caractérisé en ce que les séquences choisies sont des séquences formées d'un même nombre de récurrences consécutives, le nombre de séquences étant égal au nombre de récurrences.

3. Procédé selon la revendication 1, caractérisé en ce que les séquences choisies sont des séquences formées d'un même nombre de récurrences consécutives dans le même mode que la réponse en cours, toutes les séquences étant formées d'un même nombre de récurrences et le nombre de séquences étant égal au nombre de récurrences.

4. Procédé selon la revendication 1, caractérisé en ce que les séquences sont formées des séquences choisies de la revendication 2 et de celle de la revendication 3.

5. Procédé selon l'une des revendications 1 à 4, caractérisé en ce que les réponses sont considérées comme synchrones si elles sont reçues dans des intervalles de temps T-τ , T+τ , τ désignant un temps de tolérance.

6. Défruiteur pour extracteur de réponses de transpondeur de radar secondaire situé fonctionnellement en aval d'un récepteur, le récepteur ayant des périodes successives de réception dites récurrences et étant doté de moyens permettant la transformation de grandeurs caractérisant les signaux reçus en successions d'échantillons numériques à une cadence d'échantillonnage f, l'extracteur comportant un détecteur (10) des réponses appelées par la suite BPD émises par les transpondeurs, le défruiteur comportant des moyens de stockage (35) des informations de détection, ordonné en distance et par récurrence, un corrélateur (50) recevant en séquence du moyen de stockage les informations de détection et vérifiant pour chacune des détections BPD_{S} d'une récurrence de rang S au moyen d'une corrélation dite corrélation courante si cette détection est corrélée par la présence d'au moins (r-1) autres détections, à la même distance que la réponse courante, le corrélateur (50) recevant à cet effet en même temps que la réponse en cours de traitement BPD_{S}, les réponses situées à la même distance, d'au moins (r-1) récurrences choisies parmi les (s-1) récurrences ayant suivi la récurrence courante, le défruiteur étant caractérisé en ce que le moyen de stockage (35) est une mémoire comportant des cases mémoires ordonnées en s lignes numérotées de 0 à (s-1) et a colonnes, a représentant un nombre de cases distance, une adresse de la mémoire étant constituée par un numéro de colonne i et un numéro de ligne j et en ce que le défruiteur comporte en outre, une mémoire dite drapeau (36) identique à la mémoire de stockage et recevant du corrélateur (50) à l'adresse qu'elles avaient dans la mémoire de stockage les informations de détection de toutes les réponses ayant participé avec la réponse courante à une corrélation réussie, le corrélateur recevant en même temps que les réponses de la mémoire de stockage, la réponse éventuelle figurant dans la mémoire drapeau à la même adresse que la réponse courante dans sa mémoire, le corrélateur comportant des moyens (59) pour que la corrélation soit déclarée positive soit en cas de présence d'un signal BPD dans la mémoire drapeau à la dite même adresse soit en cas de corrélation courante réussie.

7. Défruiteur selon la revendication 6, caractérisé en ce que le corrélateur comporte un organe (51) recevant des informations caractérisant des modes des différentes récurrences et un organe de sélection (52) recevant de l'organe (51) les informations de succession de mode et sélectionnant dans la mémoire de stockage (35) les lignes qui participent à une corrélation avec la réponse courante.

8. Défruiteur selon la revendication 6, caractérisé en ce que le séquencement des opérations de chargement des mémoires (35, 36) et de corrélation est effectué à la même fréquence f que les opérations d'échantillonnage.

9. Utilisation du défruiteur selon l'une des revendication 6 à 8 pour la réalisation du procédé selon l'une des revendications 1 à 5;

## Patentansprüche

1. Verfahren zur Bereinigung der Antworten, die von Transpondern eines Sekundärradarsystems aufgrund der vom Radargerät zyklisch gemäß einem Fragemodus ausgesendeten Anfragen empfangen werden, wobei die Anfrage und die entsprechende Antwort vereinbarungsgemäß im gleichen Modus vorliegen müssen und eine Rekurrenz aus der Anfrage und den während einer Lauschperiode nach der Anfrage empfangenen Antworten besteht, wobei die Bereinigung darin besteht, zu überprüfen, ob eine in einem Zeitpunkt T der Rekurrenz empfangene Antwort positiv durch das Vorliegen von mindestens r-1 anderen im gleichen Zeitpunkt T ihrer Rekurrenz empfangenen Antworten korreliert ist, wobei diese Antworten Teil einer Folge von mindestens s die laufende Rekurrenz einschließenden Rekurrenzen sind, dadurch gekennzeichnet, daß die Korrelation über mehrere Folgen hinweg realisiert wird, die aus einer gleichen Anzahl von Rekurrenzen einschließlich der laufenden Rekurrenz gebildet werden, und daß die Korrelation als positiv erklärt wird, wenn sie für eine der Folgen positiv ist.

2. Verfahren nach Anspruch 1, dadurch gekennzeichnet, daß die gewählten Folgen solche sind, die aus einer gleichen Anzahl von aufeinanderfolgenden Rekurrenzen gebildet werden, wobei die Anzahl der Folgen gleich der Anzahl von Rekurrenzen ist.

3. Verfahren nach Anspruch 1, dadurch gekennzeichnet, daß die Folgen unter den Folgen ausgewählt werden, die von einer gleichen Anzahl von aufeinanderfolgenden Rekurrenzen im gleichen Modus wie die laufende Antwort gebildet werden, wobei alle Folgen aus einer gleichen Anzahl von Rekurrenzen gebildet werden und die Anzahl von Folgen gleich der Anzahl von Rekurrenzen ist.

4. Verfahren nach Anspruch 1, dadurch gekennzeichnet, daß die Folgen aus den Folgen gebildet werden, die gemäß Anspruch 2 oder Anspruch 3 ausgewählt wurden.

5. Verfahren nach einem der Ansprüche 1 bis 4, dadurch gekennzeichnet, daß die Antworten als synchron betrachtet werden, wenn sie im Zeitintervall zwischen T-τ und T+τ empfangen wurden, wobei τ eine Toleranzzeit bezeichnet.

6. Bereinigungsorgan für einen Extraktor von Transponderanworten eines Sekundärradarsystems, wobei das Organ funktionell hinter einem Empfänger liegt, der aufeinanderfolgende Empfangsperioden, Rekurrenzen genannt, besitzt und Mittel aufweist, um die empfangenen Signale charakterisierende Größen in mit einer Tastfrequenz f aufeinanderfolgende digitale Tastproben umzuwandeln, wobei der Extraktor einen Detektor (10) für nachfolgend BPD genannte und von den Transpondern ausgesendete Antworten enthält und wobei das Bereinigungsorgan Mittel (35) zur Speicherung der Erfassungsinformationen, die nach Abstand und Rekurrenz geordnet sind, einen Korrelator (50), der nacheinander vom Speichermittel die Erfassungsinformationen empfängt und für jede der Erfassungen BPDₛ einer Rekurrenz des Rangs S mit Hilfe einer Korrelation, laufende Korrelation genannt, überprüft, ob diese Erfassung durch das Vorhandensein von mindestens r-1 weiteren Erfassungen mit gleichem Abstand wie die laufende Antwort korreliert ist, wobei der Korrelator (50) hierzu zugleich mit der gerade verarbeiteten Antwort BPDₛ die im gleichen Abstand liegenden Antworten von mindestens (r-1) Rekurrenzen empfängt, die unter den (s-1) auf die laufende Rekurrenz folgenden Rekurrenzen ausgewählt werden, dadurch gekennzeichnet, daß das Speichermittel (35) ein Speicher mit in s Zeilen von 0 bis (s-1) und a Spalten angeordneten Zellen ist, wobei a eine Anzahl von Abstandszellen darstellt und eine Adresse des Speichers durch eine Spaltennummer i und eine Zeilennummer j gebildet wird, und daß weiter ein Fahnenspeicher (36) vorgesehen ist, der dem Speicher für die Antworten (35) gleicht und vom Korrelator (50) an der gleichen Adresse wie im Antwortspeicher (35) die Erfassungsinformationen aller Antworten empfängt, die zusammen mit der laufenden Antwort zu einer erfolgreichen Korrelation beigetragen haben, wobei der Korrelator gleichzeitig mit den Antworten des Speichers (35) die eventuelle Antwort aus dem Fahnenspeicher an der gleichen Adresse wie die laufende Antwort in seinem Speicher (35) empfängt und Mittel (59) aufweist, mit denen die Korrelation als positiv erklärt wird, entweder wenn ein Signal BPD im Fahnenspeicher an der gleichen Adresse vorliegt, oder wenn eine erfolgreiche laufende Korrelation vorliegt.

7. Bereinigungsorgan nach Anspruch 6, dadurch gekennzeichnet, daß der Korrelator ein Organ (51) aufweist, das Modi der verschiedenen Rekurrenzen kennzeichnet, und ein Auswahlorgan (52), das von dem Organ (51) die aufeinanderfolgenden Modusinformationen empfängt und im Speicher (35) die Zeilen auswählt, die an einer Korrelation mit der laufenden Antwort teilnehmen.

8. Bereinigungsorgan nach Anspruch 6, dadurch gekennzeichnet, daß die Abfolge der Operationen des Ladens der Speicher (35, 36) und der Korrelation mit der gleichen Frequenz f wie die Tastungsoperationen erfolgt.

9. Verwendung des Bereinigungsorgans nach einem der Ansprüche 6 bis 8 für die Durchführung des Verfahrens nach einem der Ansprüche 1 bis 5.

## Claims

1. Method for the defruiting of the responses from radar transponders, received by a secondary radar, to interrogations sent by the radar recurrently according to a mode of interrogation, where it is necessary, by convention, for the interrogation and the corresponding response to be in the same mode, a recurrence being formed by the interrogation and the responses received during a listening period that follows the interrogation, the defruiting consisting in ascertaining that a response received at an instant T of the recurrence is positively correlated by the presence of at least r-1 other responses received at the same instant T of their recurrence, these reponses forming part of a sequence of at least s recurrences including the current recurrence, the method being characterized in that the correlation is made on several chosen sequences formed by a same number of recurrences and all including the current recurrence and that the correlation is declared to be positive if it is positive for one of the sequences.

2. Method according to Claim 1, characterized in that the chosen sequences are sequences formed by a same number of consecutive recurrences, the number of sequences being equal to the number of recurrences.

3. Method according to Claim 1, characterized in that the chosen sequences are sequences formed by a same number of consecutive recurrences in the same mode as the current response, all the sequences being formed by a same number of recurrences and the number of sequences being equal to the number of recurrences.

4. Method according to Claim 1, characterized in that the sequences are formed by the chosen sequences of Claim 2 and by that of Claim 3.

5. Method according to one of Claims 1 to 4, characterized in that the responses are considered to be synchronous if they are received in the time intervals T-τ, T+τ, τ designating a tolerance time.

6. Defruiter for an extractor of secondary radar transponder responses located functionally downline with respect to a receiver, the receiver having successive periods of reception called recurrences and being provided with means enabling the conversion of magnitudes characterizing the received signals into strings of digital samples at a sampling rate f, the extractor comprising a detector (10) of the responses, hereafter termed BPD, sent by the transponders, the defruiter comprising means (35) for the storage of the detection information elements, ordered in terms of distance and by recurrence, a correlator (50) receiving the detection information elements in sequence from the storage means, and ascertaining, for each of the BPDs detections of a recurrence having a rank S, by means of a correlation called a current correlation, whether this detection is correlated by the presence of at least (r-1) other detections, at the same distance as the current response, the correlator (50) receiving, to this end, at the same time as the response being processed BPDs, the responses located at the same distance, from at least (r-1) recurrences chosen from among the (s-1) recurrences that have followed the current recurrence, the defruiter being characterized in that the storage means (35) is a memory comprising memory compartments ordered in s rows numbered from 0 to (s-1) and in a columns, a representing a number of range gates, an address of the memory being constituted by a column number i and a row number j, and in that the defruiter further comprises a memory called a flag memory (36) identical to the storage memory and receiving, from the correlator (50) at the address that they had in the storage memory, the detection information elements relating to all the responses that have participated with the current response in a successful correlation, the correlator receiving, at the same time as the responses from the storage memory, the response, if any, that is in the flag memory at the same address as the current response in its memory, the correlator comprising means (59) so that the correlation is declared to be positive either if a BPD signal is present in the flag memory at the said same address or in the event of a successful current correlation.

7. Defruiter according to Claim 6, characterized in that the correlator comprises a device (51) receiving information elements that characterize modes of the different recurrences and a selection device (52) receiving, from the device (51), the mode string information elements and selecting, from the storage memory (35), the rows that participate in a correlation with the current response.

8. Defruiter according to Claim 6, characterized in that the sequencing of the operations for loading the memories 35, 36 and for correlation is done at the same frequency f as the sampling operations.

9. Use of the defruiter according to one of Claims 6 to 8 to carry out the method according to one of Claims 1 to 5.
